# EUROPÄISCHE PATENTSCHRIFT

(11) **EP 0 550 542 B1**
(45) Veröffentlichungstag und Bekanntmachung des Hinweises auf die Patenterteilung: **01.06.1994**
(21) Anmeldenummer: 91916917.7
(22) Anmeldetag: 28.09.1991
(51) Int. Cl.: G01N 21/55

(54) **VORRICHTUNG ZUR QUALITATIVEN UND/ODER QUANTITATIVEN BESTIMMUNG DER ZUSAMMENSETZUNG EINER ZU ANALYSIERENDEN PROBE**
DEVICE FOR THE QUALITATIVE AND/OR QUANTITATIVE DETERMINATION OF THE COMPOSITON OF A SAMPLE TO BE ANALYSED
DISPOSITIF POUR LA DETERMINATION QUALITATIVE ET/OU QUANTITATIVE DE LA COMPOSITION D'UN ECHANTILLON A ANALYSER

(30) Priorität: 28.09.1990 DE 4030836
(43) Veröffentlichungstag der Anmeldung: 14.07.1993
(73) Patentinhaber: KIM, Yoon-Ok, D-44267 Dortmund (DE)
(72) Erfinder: KIM, Yoon-Ok, D-44267 Dortmund (DE); PRIES, Ralph, H., D-4600 Dortmund 50 (DE); YOON, Dae-Jin, D-5840 Schwerte 5 (DE)
(74) Vertreter: Münich, Wilhelm, Dr.
(86) Internationale Anmeldenummer: DE9100769
(87) Internationale Veröffentlichungsnummer: WO9206366

(56) Entgegenhaltungen:
- US-A- 3 604 927
- US-A- 3 920 336
- US-A- 3 939 350
- APPLIED OPTICS, Band 6, Nr. 4, 1. April 1967, Seiten 715-718; T.HIRSCHFELD: "Procedures for attenuated total reflection"

## Beschreibung

### Technisches Gebiet

Die Erfindung betrifft eine Vorrichtung zur qualitativen und/oder quantitativen Bestimmung der Zusammensetzung einer zu analysierenden Probe.

### Stand der Technik

Bekannt sind sogenannte Photometerkugeln, die innenseitig reflexionsfähig sind: diesen Photometerkugeln kommt die Aufgabe zu, diffus reflektierte Strahlung einer zu analysierenden Probe und/oder eines Standards (Probe mit bekannter Zusammensetzung) zu integrieren. Bei derartigen Photometerkugeln, die auch als Ulbricht-Kugeln bezeichnet werden, wird zur Erzeugung diffuser Reflexion Primärstrahlung benötigt, die entweder in die Kugel hineingestrahlt wird, oder deren Strahlungsquelle sich innerhalb des Kugelhohlraums bzw. der Kugelwand befindet. Der von der zu untersuchenden Probe regulär reflektierte Strahlungsanteil wirkt sich störend aus, da er das Meßsignal maßgebend verfälscht. Üblicherweise wird daher versucht, die regulär reflektierte Strahlung (Einfallswinkel = Ausfallswinkel) durch eine sogenannte Strahlungsfalle abzuschirmen. Eine derartige Photometerkugel, auf die der Oberbegriff des Anspruchs 1 basiert, ist aus US-A-3 920 336 bekannt.

Darüber hinaus ist eine Reflexionsmethode bekannt, die sich die physikalischen Erscheinungen bei der Strahlungsreflexion an der Grenzfläche zweier optisch unterschiedlich dichter Medien zunutze macht. Dieses Verfahren ist unter dem Namen ATR-Spektroskopie oder FMIR-Methode bekannt. Die zur Durchführung dieses Verfahrens benötigte Vorrichtung enthält das sogenannte ATR-Element, das zum Beispiel aus einem trapezförmig gestalteten Prisma besteht. Auf der Ober- und Unterseite des Elements wird die zu untersuchende Probe aufgebracht. Durch den trapezförmigen Querschnitt des ATR-Elements wird das von außen auf eine seitliche Schrägfläche des Elements auftreffende parallele Strahlungsbündel (meist) mehrfach im Element total hin- und her reflektiert. Ein derartiges Element ist aus US-A-3 604 927 bekannt.

Ein Teil der elektromagnetischen Energie dringt aber trotzdem in das optisch dünnere Medium ein. Sobald das dünnere Medium die eingedrungene Strahlung absorbiert, ist die Reflexion nicht mehr total. Dabei hängt die Eindringtiefe der beispielsweise Beispiel infraroten Strahlung unter anderem von der gewählten Wellenlänge sowie dem Einstrahlwinkel ab. Nach dem Strahlungsdurchgang durch das Element wird die aus dem Element austretende, nunmehr um den absorbierten Strahlungsanteil abgeschwächte Strahlung gemessen. Dieses Verfahren, das nach dem Prinzip der "abgeschwächten Totalreflexion" arbeitet, hat jedoch den Nachteil, daß es - nach dem heutigen Stand der Technik - praktisch nur halbquantitative Analysen ermöglicht.

### Beschreibung der Erfindung

Der Erfindung liegt insoweit die Aufgabe zugrunde, eine Vorrichtung zur Bestimmung der Zusammensetzung einer zu analysierenden Probe anzugeben, mit der sich sowohl qualitative als auch quantitative Bestimmungen mit hoher Genauigkeit durchführen lassen. Gegenüber den bekannten Vorrichtungen sollen dabei in erster Linie die Analyse/Meßgenauigkeit verbessert sowie das Nachweisvermögen, welches ein wichtiges Kriterium für die Beurteilung der Güte eines Analysenverfahrens ist, erheblich erhöht werden. Überdies soll der Anwendungsbereich erweitert werden.

Der Erfindung liegt die überraschende Erkenntnis zugrunde, daß dieses Ziel durch eine Kombination der an sich bekannten Photometerkugel mit einem an sich bekannten ATR-Element realisieren läßt. Dabei geht die Erfindung von der Überlegung aus, die Primärstrahlung außerhalb der Photometerkugel der Probe zuzuführen und auch außerhalb der Photometerkugel abzuleiten. Es gelangt somit nur die von der Probe stammende diffuse Strahlung in den Hohlraum der Photometerkugel, so daß die üblicherweise auftretende Störung durch Primärstrahlung entfällt.

Bei der vorliegenden Erfindung werden also das oder die ATR-Elemente -entgegen dem Stand der Technik - zunächst nur dazu verwendet, um der zu untersuchenden Probe Strahlung zuzuführen.

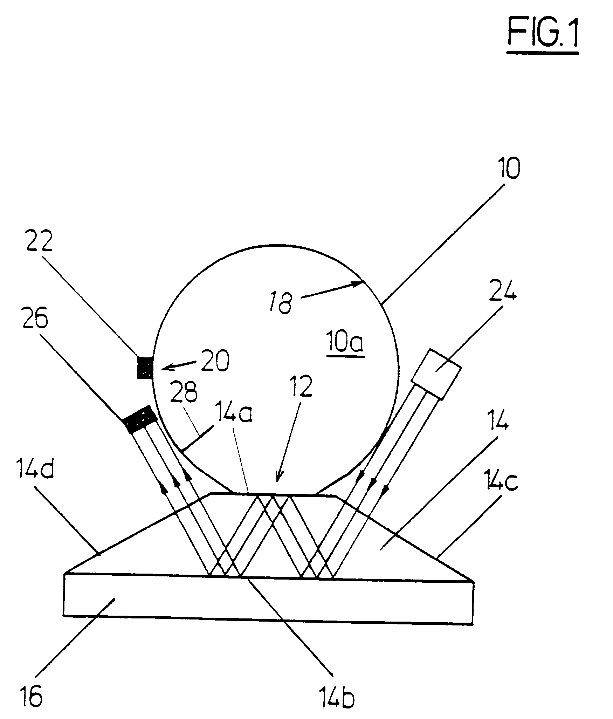

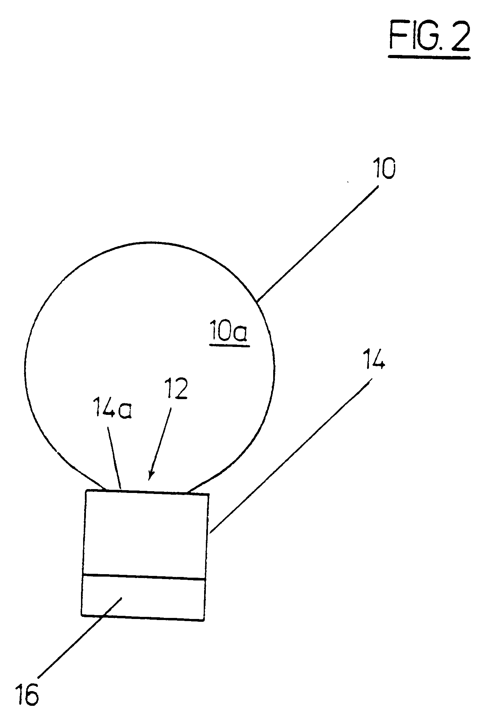

Erfindungsgemäß wird deshalb eine Vorrichtung geschaffen, die zur Integra on diffuser Strahlung wenigstens einen innenseitig reflexionsfähigen Hohlkörper aufweist, der mindestens eine Öffnung hat, die von einem ATR-Element abgedeckt ist. Auf der Unterseite des oder der ATR-Elemente (bezogen auf die Figuren 1 und 2) bzw. auf der dem Hohlkörper abgewandten Seite ist die zu analysierende Probe angeordnet.

Ferner sind (mindestens) eine Primärstrahlungsquelle, deren Strahlung auf eine von der Probe nicht bedeckte Seitenfläche des oder der ATR-Elemente gerichtet ist, sowie mindestens ein Strahlungsdetektor im Bereich des Hohlkörpers vorgesehen, der die von der Probe durch das ATR-Element in des Innere des Hohlkörpers abgegebene diffuse und/oder die im Hohlkörper reflektierte Strahlung erfaßt.

Anders ausgedrückt wird die Primärstrahlung zunächst in das ATR-Element eingeleitet. Die reflektierte Strahlung tritt nach ein- oder mehrmaliger, durch Absorption im optisch dünneren Medium geschwächter Totalreflexion an den Grenzflächen der optisch unterschiedlich dichten Medien, d.h. der Probe und des ATR-Elements am gegenüberliegenden Ende des Elements aus diesem aus. Die von der Probe diffus reflektierte bzw. die unter bestimmten Voraussetzungen gewünschte fluoreszierende Strahlung tritt durch das ATR-Element hindurch durch die Öffung des Hohlkörpers in dessen Innenraum ein und trifft dort - gegebenenfalls nach ein- oder mehrfacher Reflexion an der Innenwand des Hohlkörper auf den Strahlungsdetektor auf, so daß sie von diesem registriert wird.

Es gelangt somit nur noch diffuse bzw. fluoreszierende Strahlung in den Hohlkörper. Hierdurch wird der beim Stand der Technik vorhandene, durch Primärstrahlung verursachte Untergrund, der die Messung stört, erheblich reduziert.

Über die vom Strahlungs- bzw. Lichtdetektor registrierte diffuse Strahlung lassen sich sowohl eine qualitative als auch eine quantitative Aussage über die Zusammensetzung der zu untersuchenden Probe mit einer Genauigkeit machen, die deutlich über der mit herkömmlichen Vorrichtungen erreichbaren Genauigkeit liegt.

Durch die erfindungsgemäße Vorrichtung wird nicht nur das bekannte Verfahren, das mit diffuser Reflexion arbeitet, wesentlich verbessert, sondern es werden auch die Vorteile der bekannten ATR-Methode wesentlich ausgeweitet. Außerdem ist die erfindungsgemäß aus einer an sich bekannten Photometerkugel und einem ATR-Element kombinierte Vorrichtung auch zur Erfassung der in der Probe erzeugten Fluoreszenzstrahlung geeignet. Hierzu sind gegebenenfalls entsprechende Maßnahmen, wie geeignete Anregungs-Lichtqellen sowie Filter vorzusehen.

Der Hohlkörper kann als Polyeder, (Rotations-)Ellipsoids, Paraboloid, Halbkugel, Kugel oder als irregulärer Körper ausgebildet sein. Entscheidend ist lediglich, daß der Hohlkörper integrierende Eigenschaften hat, die in bestimmten Fällen durch eine irreguläre Form gut verwirklicht werden können.

Zur Optimierung der Meßgenauigkeit sollte die vom ATR-Element abgedeckte Öffnung des Hohlkörpers nur einen kleinen Teil der inneren Oberfläche bilden. Insbesondere sollte die Fläche der Öffnung nicht mehr als 10% der Gesamt-Innenoberfläche des Hohlkörper und vorzugsweise nicht mehr als 5% sein. Hierdurch werden Meßungenauigkeiten, die insbesondere dadurch entstehen, daß Strahlung aus dem Innert des Hohlkörpers wieder auf die Öffnung zurückreflektiert wird, minimiert.

Der oder die Hohlkörper können - wie bereits ausgeführt - die unterschiedlichsten Formen und Größen aufweisen. Insbesondere kann eine Vorrichtung auch mehrere Hohlkörper aufweisen, die unterschiedliche Formen und Größen aufweisen. Der maximale Durchmesser der Hohlkörper sollte jedoch 1000 mm nicht überschreiten. Bevorzugt sind jedoch Abmessungen kleiner als 200 mm und insbesondere zwischen 2 mm und.20 mm.

Der oder die Strahlungsdetektoren zur Erfassung der diffusen Strahlung aus der Probe können auf die unterschiedlichste Art und Weise angeordnet werden. Die Strahlungsdetektoren können in einer zweiten Wandöffnung des Hohlkörpers angeordnet werden; ebenso ist es aber auch möglich, den oder die Strahlungsdetektoren im Inneren des Hohlkörpers zu positionieren. Dadurch, daß erfindungsgemäß die Reflexion eines Primärstrahlungsanteils innerhalb des Hohlkörpers vermieden wird, kommt der Bedeutung der Anordnung des Strahlungsdetektors im Bereich des Hohlkörpers erfindungsgemäß nur eine untergeordnete Bedeutung bei.

Im Interesse einer möglichst hohen Meßgenauigkeit ist es selbstverständlich, daß das ATR-Element die korrespondierende Öffnung des Hohlkörpers möglichst dicht abdecken soll. Hierzu stehen verschiedene Abdichtungsmöglichkeiten, zum Beispiel Dichtungen oder Flansche, zur Verfügung.

Die Form des ATR-Elements kann unterschiedlich sein, zum Beispiel halbzylindrisch oder prismatisch. Aus zum Beispiel durch spezielle Prismenformen resultierender Strahlenführung im Inneren des ATR-Elementes kann die Anzahl der Totalreflexionen gesteigert werden. Dadurch wird die Wahrscheinlichkeit der Wechselwirkung zwischen Probe und zugeführter Strahlung vergrößert, was ein erhöhtes stoffspezifisches Signal zur Folge hat. Die Anzahl der Reflexionen ist proportional zur effektiven Weglänge der Strahlung im Elementinneren sowie zum Cotangens des Einfallswinkels und umgekehrt proportional zur Elementdicke.

Eine bevorzugte Ausführungsform ist ein Schwalbenschwanzprisma, dessen Größe von der gewünschten Zahl der Reflexionen und von der Größe des verwendeten Integrations-Hohlkörpers abhängt und sich im übrigen aus der vorstehend genannten Dimensionierung der korrespondierenden Öffnung in der Wand des Hohlkörpers ergibt. Dabei sollte die Dicke größer 0,25 mm und die effektive Länge (Mittelpunkt der Eintrittsapertur bis Mittelpunkt der Austrittsapertur) kleiner als 100 mm sein. Für spezielle Anwendungen wird ein ATR-Element in der Form einer (ggf. modifizierten) Halbkugel besonders bevorzugt.

Der Hohlkörper kann aus einem Material mit hohem Reflexionsvermögen wie Metall oder Keramik bestehen; ebenso ist es möglich, zum Beispiel die Innenfläche einer Metallwand mit einer keramischen Beschichtung, zum Beispiel aus Magnesit, zu beschichten oder mit einem entsprechenden Anstrich zu versehen. Die Wanddicke des Integrationskörpers sollte in der Regel 70 mm nicht überschreiten.

Die beschriebene Strahlungsquelle kann zum Beispiel eine Xe-Dampflampe oder eine beheizte Keramik aufweisen. Sie kann aber auch als hochkohärente Laserstrahlung aussehende Strahlungsquelle gestaltet sein. In diesem Fall ist es zur exakten Einleitung der Laserstrahlung vorteilhaft, die kollimierte Strahlung - gegebenenfalls über entsprechende Lichtwellenleiter - von der Strahlungsquelle auf die Eintrittsfläche des Elementes gezielt zu führen.

Die erfindungsgemäße kombinierte Vorrichtung ermöglicht die Realisierung verschiedener analytischer Messungen unterschiedlichster Substanzen. Es können feste, flüssige und auch gasförmige Substanzen untersucht werden. Die Zusammensetzung der verschiedenen Stoffe kann sowohl qualitativ als auch quantitativ bestimmt werden. Beispielsweise ist ein Einsatz der kombinierten Vorrichtung für die Analyse von Trink- und Abwasser, Abgasen, Lebensmitteln usw. sowie zur chemischen Bestimmung sowohl biologischen als auch biochemischen Materialas möglich. Die Vorrichtung eignet sich zudem zur Untersuchung von Oberflächenverunreinigungen verschiedener Stoffe. Insbesondere wird die kombinierte Vorrichtung bei der Analytik im klinischchemischen Bereich zur Anwendung gelangen. Andererseits läßt sich die Vorrichtung auch für andere atom- und molekülspektroskopische Methoden nutzen. Abschließend sollte noch erwähnt werden, daß die erfindungsgemäße Vorrichtung auch zerstörungsfreie Analysen ermöglicht. Die Probe selbst wird auf die Unterseite (bezogen auf Figur 1 und 2) des ATR-Elements aufgebracht, bei flüssigen Substanzen wird die entsprechende Oberfläche mit der Flüssigkeit benetzt bzw. bei festen Proben gegen die gepreßt.

Weitere Merkmale der Erfindung ergeben sich aus den Merkmalen der Unteransrüche sowie den sonstigen Anmeldungsunterlagen.

### Kurze Beschreibung der Zeichnung

Die Erfindung wird nachstehend anhand eines Ausführungsbeispiels näher erläutert. Dabei zeigen in stark schematisierter Darstellung
- Figur 1:: einen Längsschnitt durch eine erfindungsgemäße Vorrichtung
- Figur 2:: einen Querschnitt durch die Vorrichtung nach Figur 1

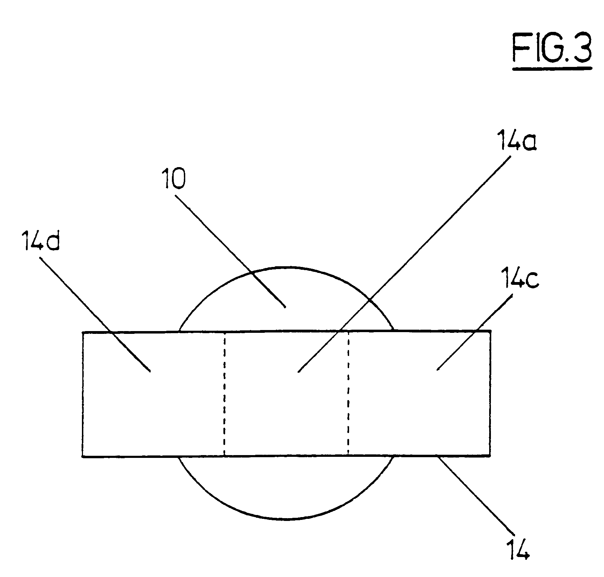

- Figur 3:: eine Aufsicht von unten auf die Vorrichtung nach Figur 1

### Beschreibung eines Ausführungsbeispiels

Die Vorrichtung nach Figur 1 besteht aus einem - bei dem gezeigten Ausführungsbeispiel - in Form einer Kugel gestalteten Hohlkörper 10, der an seinem unteren Ende eine Öffnung 12 aufweist, die von der Oberfläche 14a eines ATR-Elemtes 14 vollständig abgedeckt wird. Das Element 14 ist in Form eines Schwalbenschwanzprismas gestaltet und besitzt entsprechend eine Unterseite 14b und zwei schräge Seitenflächen 14c bzw. 14d.

An der Unterseite 14b liegt eine zu analysierende Probe 16 an, die hier zum Beispiel aus einem oberflächlich verunreinigten Kunststoff besteht.

Die Kugel 10 besteht aus einer metallischen Wand, die innenseitig mit einer reflektierenden Beschichtung 18 versehen ist.

In dem in Figur 1 linken Abschnitt der Kugel 10 befindet sich eine weitere Öffnung 20, in der ein Strahlungsdetektor 22 angeordnet ist.

In das Innere 10a der Kugel 10 ragt eine ebenfalls mit einer reflektierenden Beschichtung versehenen Platte 28 hinein, welche an der Innenwand (Beschichtung) 18 der Kugel 10 befestigt ist und den direkten Strahlengang zwischen der Öffnung 12 und der Strahlungsdetektoröffnung 20 abdeckt.

Über eine schematisch mit dem Bezugszeichen 24 dargestellte Strahlungsquelle zur Aussendung hochkohärenter Laserstrahlung wird die Primärstrahlung über die Seitenfläche 14c in das Element 14 geleitet.

Zwischen Primärstrahlungsquelle 24 und ATR-Element 14 (bzw. zwischen ATR-Element 14 und Strahlungsdetektor 26) können zur Optimierung der optischen Abbildungsqualität geeignete optische Teilvorrichtungen, wie z. B. Linsen (kombinationen), Blenden, Filter, usw. eingefügt werden. Auch zwischen Hohlkörper 10 und ATR-Element 14 können sich ein oder mehrere Filter befinden. Diese optischen Teilelemente sind jedoch zwecks besserer Übersichtlichkeit in der Figur nicht enthalten. Darüberhinaus können das ATR-Element 14 sowie sonstige optische Teilelemente auch -zur Erzielung bestimmter Eigenschaften bzw. zur Filterung unerwünschter Wellenlängen - in geeigneter Weise beschichtet sein.

Das parallele Strahlenbündel wird an der Unterseite 14b nahezu total reflektiert, bis es an die Oberseite 14a erreicht, von wo es analog (nahezu) total zurückreflektiert wird. Diese Hin- und Herreflexion wiederholt sich je nach gewähltem Eintrittswinkel der Primärstrahlung sowie nach vorhandener Kristalldimensionierung mehr oder weniger häufig, wobei ebenfalls zur besseren Übersichtlichkeit in der Figur der Strahlengang nur schematisch dargestellt ist. Die total reflektierte Primärstrahlung tritt schließlich über die gegenüberliegende Seitenfläche 14d des Elements 14 aus.

Ein Teil der Primärstrahlung dringt jedoch in die Probe 16 ein und wird (später) von dort diffus reflektiert. Diese diffus reflektierte Strahlung gelangt in das ATR-Element 14 und tritt, falls sie den Grenzwinkel der Totalreflexion nicht überschreitet, durch die Oberseite 14a in den Innenraum 10a der Kugel 10 ein, wird an deren Innenwand 18 nach den Gesetzen der geometrischen Optik so oft hin- und herreflektiert bis sie über die Öffnung 20 die Kugel verläßt, auf den Strahlungsdetektor 22 trifft und von diesem erfaßt wird.

Der Weg der diffusen Strahlung ist aus Gründen der besseren Übersichtlichkeit nicht dargestellt.

Die Messung der diffusen Strahlung über den Strahlungsdetektor 22 ermöglicht sowohl eine quantitative wie auch qualitative Bestimmung der von der Probe absorbierten bzw. gestreuten Strahlung und damit eine entsprechende Analyse der zu untersuchenden Probe. Diffuse Strahlung ist zum Absorptionsvermögen der Probe proportional und zu ihrem Streuvermögen umgekehrt proportional. Mit Hilfe eines am strahlungsausgangsseitigen Ende des ATR-Elements angeordneten weiteren Strahlungsdetektors 26 kann auch die aus dem Element 14 durch die Fläche 14d austretende abgeschwächte Primärstrahlung erfaßt werden. Anders ausgedrückt: Im Sinne der vorliegenden Erfindung wird zuerst nur die von der Probe diffus reflektierte Strahlung, welche durch das ATR-Element hindurch ins Innere des integrierenden Hohlkörpers gelangt, gemessen. Das ATR-Element wird dabei -wie bereits erwähnt - benutzt, um der zu untersuchenden Probe Strahlung zuzuführen. Es geht also zunächst nicht um die Messung der aus dem ATR-Element austretenden abgeschwächten Primärstrahlung. Die Erfindung wurde jedoch von vornherein so konzipiert, daß auch diese zur Erhöhung der Zuverlässigkeit über die Aussage der Analysenrichtigkeit zusätzlich gemessen werden kann. Dies bedeutet, daß eine Probe simultan mit zwei (bzw. falls, wenn gewünscht, die von einer Probe ausgesandte Fluoreszenzstrahlung mit Hilfe zusätzlicher Integrationshohlkörper und Strahlungsdetektoren gesondert erfaßt wird, sogar mit drei) voneinander unabhängigen Analysenverfahren untersucht werden kann. Führen beide (bzw. alle drei) zu gleichen Ergebnissen, wird die Richtigkeit der Analyse zusätzlich untermauert.

## Patentansprüche

1. Vorrichtung zur qualitativen und/oder quantitativen Bestimmung der Zusammensetzung einer zu analysierenden Probe (16), mit mindestens einem Hohlkörper (10), der innenseitig mit optisch reflektierendem Material beschichtet ist oder ganz aus optisch reflektierendem Material besteht, und der wenigstens eine Öffnung (12) sowie wenigstens einen Strahlungsdetektor (22) im Innern (10a) und/oder im Bereich des Hohlkörpers (10) aufweist, dadurch gekennzeichnet, daß
- wenigstens ein ATR-Element (14) die Öffnung (12) des Hohlkörpers abdeckt, daß
- an der dem Hohlkörper abbgewandten Seite (14b) des ATR-Elements die zu analysierende Probe (16) anbringbar ist, und daß
- auf eine Fläche (14c) des ATR-Elements die Strahlung mindestens einer Primärstrahlungsquelle (24) gerichtet ist.

2. Vorrichtung nach Anspruch 1,
dadurch **gekennzeichnet**, daß der Hohlkörper die Form eines Polyeders, Ellipsoids, Paraboloids, einer Halbkugel oder einer Kugel oder eine irreguläre Form aufweist.

3. Vorrichtung nach Anspruch 2,
dadurch **gekennzeichnet**, daß die Form des Hohlkörpers eine Zwischen- oder Mischform regulärer Körper ist.

4. Vorrichtung nach einem der Ansprüche 1 bis 3,
dadurch **gekennzeichnet**, daß die Gesamtfläche der Öffnung(en) (12) des Hohlkörpers (10) maximal 10% der Innenfläche des Hohlkörpers beträgt (betragen).

5. Vorrichtung nach einem der Ansprüche 1 bis 4,
dadurch **gekennzeichnet**, daß die Gesamtfläche der Öffnung(en) (12) des Hohlkörpers (10) maximal 5% der Innenfläche des Hohlkörpers beträgt (betragen).

6. Vorrichtung nach einem der Ansprüch 1 bis 5,
dadurch **gekennzeichnet**, daß der direkte Strahlengang zwischen Eintrittsöffnung (12) und Strahlungsdetektor (22) durch mindestens einen Körper (28) unterbrochen ist.

7. Vorrichtung nach einem der Ansprüche 1 bis 6,
dadurch **gekennzeichnet**, daß das ATR-Element die Form eines Prismas, eines Halbzylinders, eines Trapezes oder einer Halbkugel oder eine irreguläre Form aufweist.

8. Vorrichtung nach Anspruch 7,
dadurch **gekennzeichnet**, daß die Form des ATR-Elementes eine Zwischen- bzw. Mischform regulärer Körper ist.

9. Vorrichtung nach einem der Ansprüche 1 bis 8,
dadurch **gekennzeichnet**, daß zwischen dem Hohlkörper (10) und dem ATR-Element (14) mindestens ein optisches Filter angebracht ist.

10. Vorrichtung nach einem der Ansprüche 1 bis 9,
dadurch **gekennzeichnet**, daß die Oberfläche des ATR-Elementes (14) optisch ganz oder teilweise vergütet ist.

11. Vorrichtung nach einem der Ansprüche 1 bis 10,
dadurch **gekennzeichnet**, daß die Primärstrahlungsquelle (24) eine Xe-Dampflampe oder eine Hg-Hochdrucklampe oder eine beheizbare Keramik ist.

12. Vorrichtung nach Anspruch 11,
dadurch **gekennzeichnet**, daß die Keramik eine Oxid- oder Karbidkeramik, wie beispielsweise ein Nernst-Stift oder ein Siliciumcarbid-Stab ist.

13. Vorrichtung nach einem der Ansprüche 1 bis 11,
dadurch **gekennzeichnet**, daß die Primärstrahlungsquelle (24) ein Laser ist, vorzugsweise ein HeNe-Laser oder ein Diodenlaser.

14. Vorrichtung nach einem der Ansprüche 1 bis 13,
dadurch **gekennzeichnet**, daß die Primästrahlungsquelle (24) mit dem ATR-Element über einen Lichtwellenleiter verbunden ist.

15. Vorrichtung nach einem der Ansprüche 1 bis 14,
dadurch **gekennzeichnet**, daß mindestens ein weiterer Strahlungsdetektor (26) im Außenbereich des ATR-Elementes (14) zur Erfassung der aus dem ATR-Element (14) durch dessen Seitenfläche (14d) austretenden abgeschwächten Primästrahlung vorgesehen ist.

16. Vorrichtung nach Anspruch 15,
dadurch **gekennzeichnet**, daß der Strahlungsdetektor (26) über Lichtwellenleiter mit dem ATR-Element verbunden ist.

17. Vorrichtung nach einem der Ansprüche 1 bis 16,
dadurch **gekennzeichnet**, daß die Größe aller für die Vorrichtung benötigten Teile maximal 1000 mm beträgt.

18. Vorrichtung nach Anspruch 17,
dadurch **gekennzeichnet**, daß der Hohlkörper (10), die Primärstrahlungsqelle (24) und der Strahlungsdetektor (20 bzw. 26) in ihrer größten Erstreckung nicht größer als 20 mm sind.

19. Vorrichtung nach einem der Ansprüche 1 bis 18,
dadurch **gekennzeichnet**, daß die Primärstrahlungsquelle (24) und der Strahlungsdetektor (20, bzw. 26) nicht größer als 2 mm in ihrer größten Erstreckung sind.

20. Vorrichtung nach einem der Ansprüche 1 bis 19,
dadurch **gekennzeichnet**, daß zwischen Hohlkörper (10) und ATR-Element (14) und/oder Primärstrahlungsquelle (24) und ATR-Element (14) und/oder ATR-Element (14) und Strahlungsdetektor (26) optische Teilvorrichtungen wie Linsen oder Blenden längd des Strahlengangs angeordnet sind.

21. Vorrichtung nach einem der Ansprüche 1 bis 20,
dadurch **gekennzeichnet**, daß der Einfallswinkel der Primärstrahlung auf das ATR-Element beliebig einstellbar ist.

22. Vorrichtung nach einem der Ansprüche 1 bis 21,
dadurch **gekennzeichnet**, daß der Einfallswinkel so gewählt ist, daß in der Probe Fluoreszenzstrahlung erzeugbar ist.

23. Vorrichtung nach einem der Ansprüche 1 bis 22,
dadurch **gekennzeichnet**, daß die Primärstrahlungsquelle (24) Strahlung mit unterschiedlichen Wellenlängen emittiert, das getrennt oder gemischt in das ATR-Element (14) einleitbar ist.

24. Vorrichtung nach einem der Ansprüche 1 bis 23,
dadurch **gekennzeichnet**, daß die am Strahlungsdetektor anliegenden elektrischen Signale durch ein oder mehrere Frequenzfilterungsverfahren wie Fouriertransformation, Anwendung multilinearer oder multivarianter Regressionsanalyse für die Multielement- und/oder Mehrkomponentenanalyse nutzbar sind.

## Claims

1. Device for the qualitative and/or quantitative assay of the composition of a specimen (16) to be analyzed, comprising
at least one hollow body (10) coated on its inside surface with an optically reflecting material or composed in its entirety of an optically reflecting material, which body comprises at least one aperture (12) as well as at least one radiation detector (12) inside (10a) and/or in the vicinity of said hollow body (10),
**characterized** in that
- at least one ATR element (14) covers said aperture (12) in said hollow body,
- at that surface (14b) of said ATR element, which is turned away from said hollow body, said specimen to be analyzed (16) may be disposed, and
- that the radiation of at least one primary radiation source (24) is directed onto one surface (14c) of said ATR element.

2. Device according to Claim 1,
**characterized** in that said hollow body has the shape of a polyhedron, an ellipsoid, a paraboloid, a hemisphere or a sphere, or an irregular shape.

3. Device according to Claim 2,
**characterized** in that the shape of said hollow body corresponds to an intermediate or mixed form of regular bodies.

4. Device according to any of Claims 1 to 3,
**characterized** in that the total area of said aperture(s) (12) of said hollow body (10) correspond(s) to 10% of the interior surface of said hollow body at maximum.

5. Device according to any of Claims 1 to 4,
**characterized** in that the total area of said aperture(12) of said hollow body (10) correspond(s) to 5% of the interior surface of said hollow body at maximum.

6. Device according to any of Claims 1 to 5,
**characterized** in that the direct optical path between the entrance aperture (12) and said radiation detector (22) is interrupted by at least one body (28).

7. Device according to any of Claims 1 to 6,
**characterized** in that said ATR element has the shape of a prism, a semi-cylinder, a trapezoid or a hemisphere, or an irregular shape.

8. Device according to Claim 7,
**characterized** in that the shape of said ATR element corresponds to an intermediate or mixed form of regular bodies.

9. Device according to any of Claims 1 to 8,
**characterized** in that at least one optical filter is disposed between said hollow body (10) and said ATR element (14).

10. Device according to any of Claims 1 to 9,
**characterized** in that the surface of said ATR element (14) is completely or partly optically finished.

11. Device according to any of Claims 1 to 10,
**characterized** in that said primary radiation source (24) is an Xe vapour lamp or a Hg high-pressure lamp or a heatable ceramic element.

12. Device according to any of Claims 1 to 11,
**characterized** in that said ceramic is an oxide or carbide ceramic material such as a Nernst element or a silicon carbide rod.

13. Device according to any of Claims 1 to 11,
**characterized** in that said primary radiation source (24) is a laser, preferably a He-Ne or a diode laser.

14. Device according to any of Claims 1 to 13,
**characterized** in that said primary radiation source (24) is connected to said ATR element by means of a light guide.

15. Device according to any of Claims 1 to 14,
**characterized** in that at least one additional radiation detector (26) is provided outside said ATR element (14) for detecting the attenuated primary radiation which exits from said ATR element (14) through the lateral surface (14d) thereof.

16. Device according to Claim 15,
**characterized** in that said radiation detector (26) is connected to said ATR element by means of a light guide.

17. Device according to any of Claims 1 to 16,
**characterized** in that the size of all the elements required for the device amounts to 1,000 mm at maximum.

18. Device according to Claim 17,
**characterized** in that said hollow body (10), said primary radiation source (24), and said radiation detector (20 or 26, respectively) do not exceed 2 mm along their longest dimension.

19. Device according to any of Claims 1 to 18,
**characterized** in that said primary radiation source (24) and said radiation detector (20 or 26, respectively) do not exceed 2 mm along their longest dimension.

20. Device according to any of Claims 1 to 19,
**characterized** in that optical splitting means such as lenses or diaphragms are disposed along the optical path between said hollow body (10) and said ATR element (14) and/or said primary radiation source (24) and said ATR element (14) and/or said ATR element (14) and said radiation detector (26).

21. Device according to any of Claims 1 to 20,
**characterized** in that the angle of incidence of said primary radiation onto said ATR element is optionally adjustable.

22. Device according to any of Claims 1 to 21,
**characterized** in that the angle of incidence is selected in such a manner that a fluorescent radiation may be produced in said specimen.

23. Device according to any of Claims 1 to 22,
**characterized** in that said primary radiation source (24) emits a radiation having different wavelengths, which may be introduced into said ATR element (14) either separately or in combination.

24. Device according to any of Claims 1 to 23,
**characterized** in that the electrical signals applied to said radiation detector are utilizable by one or more frequency filtering methods such as the Fourier transform, the application of multi-linear or multi-variant regression analysis for the multi-element and/or multi-component analysis.

## Revendications

1. Dispositif à la détermination qualitative et/ou quantitative de la composition d'un échantillon à analyser (16), comprenant:
au moins un corps creux (10) qui est revêtu d'un matériau optiquement réfléchissant à sa face intérieure ou est composé, dans sa totalité, d'un matériau optiquement réfléchissant, et qui comprend au moins une ouverture (12) ainsi qu'au moins un détecteur de rayonnement (22) à l'intérieur (10a) et/ou à la proximité dudit corps creux (10),
**caractérisé** en ce
- qu'au moins un élément ATR (14) couvre ladite ouverture (12) dudit corps creux,
- qu'à la face (14b) dudit élément ATR, qui est détournée dudit corps creux, on peut disposer ledit échantillon à analyser (16), et
- en ce que le rayonnement d'au moins une source de rayonnement primaire (24) est dirigé sur une face (14c) dudit élément ATR.

2. Dispositif selon la revendication 1,
**caractérisé** en ce que ledit corps creux présente la forme d'un polyèdre, d'un ellipsoïde, d'un paraboloïde, d'un hémisphère ou d'une sphère, ou une forme irrégulière.

3. Dispositif selon la revendication 2,
**caractérisé** en ce que la forme dudit corps creux corresponde à une forme intermédiaire ou mixte des corps régulières.

4. Dispositif selon une quelconque des revendications 1 à 3,
**caractérisé** en ce que l'aire totale de ladite ou lesdites ouverture(s) (12) dudit corps creux (10) corresponde(nt) à 10% de l'aire intérieure dudit corps creux au maximum.

5. Dispositif selon une quelconque des revendications 1 à 4,
**caractérisé** en ce que l'aire totale de ladite ou lesdites ouverture(s) (12) dudit corps creux (10) corresponde(nt) à 5% de l'aire intérieure dudit corps creux au maximum.

6. Dispositif selon une quelconque des revendications 1 à 5,
**caractérisé** en ce que le trajet optique directe entre l'ouverture d'entrée (12) et le détecteur de rayonnement (22) est interrompu par au moins un corps (28).

7. Dispositif selon une quelconque des revendications 1 à 6,
**caractérisé** en ce que ledit élément ATR présente la forme d'un prisme, d'un demi-cylindre, d'un trapèze ou d'un hémisphère, ou une forme irrégulière.

8. Dispositif selon la revendication 7,
**caractérisé** en ce que la forme dudit élément ATR corresponde à une forme intermédiaire ou mixte des corps régulières.

9. Dispositif selon une quelconque des revendications 1 à 8,
**caractérisé** en ce qu'au moins un filtre optique est disposé entre ledit corps creux (10) et ledit élément ATR (14).

10. Dispositif selon une quelconque des revendications 1 à 9,
**caractérisé** en ce que la surface dudit élément ATR (14) est traitée optiquement, soit complètement ou en partie.

11. Dispositif selon une quelconque des revendications 1 à 10,
**caractérisé** en ce que ladite source de rayonnement primaire (24) est une lampe à vapeur Xe ou une lampe à haute pression en Hg ou un élément céramique chauffable.

12. Dispositif selon une quelconque des revendications 1 à 11,
**caractérisé** en ce que ladite céramique est une céramique à oxyde ou carbure, comme p.e. un ergot de Nernst ou une barre en carbure de silicium.

13. Dispositif selon une quelconque des revendications 1 à 11,
**caractérisé** en ce que ladite source rayonnement primaire (24) est un laser, de préférence un laser He-Ne ou à diodes.

14. Dispositif selon une quelconque des revendications 1 à 13,
**caractérisé** en ce que ladite source de rayonnement primaire (24) est reliée audit élément ATR par un guide de lumière.

15. Dispositif selon une quelconque des revendications 1 à 14,
**caractérisé** en ce qu'au moins un autre détecteur de rayonnement (26) est disposé à l'extérieur dudit élément ATR (14) pour détecter le rayonnement primaire affaibli, qui sort dudit élément ATR (14) par la surface latérale (14d) du dernier.

16. Dispositif selon la revendication 15,
**caractérisé** en ce que ledit détecteur de rayonnement (26) est relié audit élément ATR par des guides de lumière.

17. Dispositif selon une quelconque des revendications 1 à 16,
**caractérisé** en ce que les dimensions de tous les éléments requis pour le dispositif ne dépassent pas 1000 mm.

18. Dispositif selon la revendication 17,
**caractérisé** en ce que ledit corps creux (10), ladite source de rayonnement primaire (24), et ledit détecteur de rayonnement (20 ou respectivement 26) ne dépassent pas 20 mm dans leur dimension la plus grande.

19. Dispositif selon une quelconque des revendications 1 à 18,
**caractérisé** en ce que ladite source rayonnement primaire (24) et ledit détecteur de rayonnement (20 ou respectivement 26) ne dépassent pas 2 mm dans leur dimension la plus grande.

20. Dispositif selon une quelconque des revendications 1 à 19,
**caractérisé** en ce que des moyens optiques prismatiques comme des lentilles ou diaphragmes sont disposés le long du trajet optique entre ledit corps creux (10) et ledit élément ATR (14) et/ou ladite source de rayonnement primaire (24) et ledit élément ATR (14) et/ou ledit élément ATR (14) et ledit détecteur de rayonnement (26).

21. Dispositif selon une quelconque des revendications 1 à 20,
**caractérisé** en ce que l'angle d'incidence du rayonnement primaire sur ledit élément ATR est ajustable à volonté.

22. Dispositif selon une quelconque des revendications 1 à 21,
**caractérisé** en ce que l'angle d'incidence est choisi de façon à permettre la production d'un rayonnement de fluorescence dans ledit échantillon.

23. Dispositif selon une quelconque des revendications 1 à 22,
**caractérisé** en ce que ladite source de rayonnement primaire (24) émet un rayonnement à longueurs d'onde différentes, qu'on peut introduire, soit séparément ou en combinaison, dans ledit élément ATR (14).

24. Dispositif selon une quelconque des revendications 1 à 23,
**caractérisé** en ce que les signaux électriques appliqués audit détecteur de rayonnement sont utilisables moyennant une ou plusieurs méthodes de filtrage de fréquences, comme la transformation de Fourier, l'application de l'analyse par régression multi-linéaire ou multi-variantes pour l'analyse de plusieurs éléments et/ou plusieurs composants.
